# EUROPEAN PATENT SPECIFICATION

(11) **EP 0 373 773 B1**
(45) Date of publication and mention of the grant of the patent: **01.03.1995**
(21) Application number: 89311923.0
(22) Date of filing: 17.11.1989
(51) Int. Cl.: G06F 13/40

(54) **Disengaging electrical circuit boards from power-supply units**
Abtrennung von elektrischen Schaltungskarten von Stromversorgungseinheiten
Séparation de cartes de circuit électriques d'unités d'alimentation

(30) Priority: 19.11.1988 JP 293191/88
(43) Date of publication of application: 20.06.1990
(73) Proprietor: FUJITSU LIMITED, Kawasaki-shi, Kanagawa 211 (JP)
(72) Inventor: Ikehara, Shohei, Yokohama-shi Kanagawa 244 (JP)
(74) Representative: Fane, Christopher Robin King

(56) References cited:
- EP-A- 0 241 905
- EP-A- 0 254 456
- US-A- 4 200 865
- US-A- 4 510 553

## Description

The present invention relates to disengaging electrical circuit boards from power-supply units.

Recent increases in the use of online computer systems have incurred a need for reliable non-stop operation of such systems. To this end, if a fault occurs in the system the faulty portion must be replaced by an operative standby device without interrupting the power supply to the system.

A circuit board assembly for a computer system, described in EP-A-0241905, may be considered to comprise a circuit board removably engaged with an electrical power supply unit for delivering electrical power and control signals to the board, which board includes a clocked circuitry element switchable, by application thereto of a predetermined clock signal (CLK) delivered to the board from the said power supply unit, from a first state to a second state in which the electric current drawn by the said element is high as compared with the current drawn thereby when in the said first state.

In a conventional method of connecting a board (printed circuit board) to such a system in a powered-up condition (in a "hot state"), when the board is connected to the system, the ground pins are first connected to the board and then the power source supply pins are connected. No damage to or failure of elements (e.g. memory elements, etc.) mounted on the board will be caused if a small current is flowing through the board and the pin current capacity is sufficient.

However, if the current capacity of a single connecting pin is not sufficient, so that a plurality of power source pins must be used (as in EP-A-0241905), when the board is connected to or disconnected from a mother-board through one or more connectors, a simultaneous connection or disconnection of the plurality of pins cannot be guaranteed, and thus sometimes a large current flows through only one pin, whereby that pin is destroyed. Accordingly, conventionally, it is potentially dangerous to connect and disconnect board through which a large current flows while the board is in the hot state.

According to a first aspect of the present invention there is provided a circuit board assembly of the kind comprising a circuit board removably engaged with an electrical power supply unit for delivering electrical power and control signals to the board, which board includes a clocked circuitry element switchable, by application thereto of a predetermined clock signal delivered to the board from the said power supply unit, from a first state to a second state in which the electric current drawn by the said element is high as compared with the current drawn thereby when in the said first state; characterised in that the said circuit board further includes clock enable/disable means switchable selectively from an enabling state, permitting such a clock signal to bring about switching of the said element to the said second state, to a disabling state preventing such switching of the said element, thereby to maintain the said element in a low-current state so that the danger of destruction of connection terminals used to connect the circuit board to the power supply unit is reduced during disengagement of the circuit board from the power supply unit.

According to a second aspect of the present invention there is provided a method of removing a circuit board from an electrical power supply unit with which the said board is engaged, which unit serves for delivering electrical power and control signals to the said board which includes a clocked circuitry element switchable, by application thereto of a predetermined clock signal delivered to the board from the said power-supply unit, from a first state to a second state in which the electric current drawn by the said element is high as compared with the current drawn thereby when in the said first state; characterised by the step of switching clock enable/disable means, which form part of the said board, from an enabling state, permitting such a clock signal to bring about switching of the said element to the said second state, to a disabling state preventing such switching of the said element, so that the removal can then be effected whilst the said element is maintained, by operation of the clock enable/disable means in the said disabling state, in a low-current state.

According to a third aspect of the present invention there is provided a method of bringing a circuit board into engagement with an electrical power supply unit so that the unit can serve for delivering electrical power and control signals to the said board which includes a clocked circuitry element switchable, by application thereto of a predetermined clock signal delivered to the board from the said power supply unit, from a first state to a second state in which the electric current drawn by the said element is high as compared with the current drawn thereby when in the said first state; characterised in that the board is brought into engagement with the power supply unit whilst clock enable/disable means, which form part of the said board, are in a disabling state, preventing such a clock signal from bringing about switching of the said element to the said second state, so that the engagement can be effected whilst the said element is maintained, by operation of the clock enable/disable means in the said disabling state, in a low-current state, whereafter the said clock enable/disable means are switched to an enabling state permitting such switching of the said element.

Such a circuit board assembly and such methods can enable the connection and/or disconnection of a board through which a large current flows when the board is in normal use, without the need to switch off the power supplied to the board and with little danger of damage to connection terminals thereof, by providing the clock enable/disable means which supply a clock signal to the clocked circuitry elements (dynamic elements) mounted on the board, in such a manner as to ensure that connection or disconnection of the board in the hot state is only effected while a low current flows therethrough.

In the computer system circuit board assembly described in EP-A-0241905 a board being inserted into or removed from the assembly generates a system initialisation signal which results in traffic on the system bus being suspended temporarily to avoid adverse affects on other boards currently in place in the assembly. However, the system clock signal is not interrupted and continues to reach electronic circuitry elements on the board being removed or inserted so that the board remains in a high-current state at the moment the power supply connection terminals separate.

Another computer system circuit board assembly, described in EP-A-0254456, proposes interrupting the system clock during insertion or removal of a board in order to freeze traffic on the system bus. However, this results in processing on all boards being stopped during insertion or removal of a board.

Yet another computer system circuit board assembly, described in US 4200685, proposes isolating all the input and/or output signals of a board from the system bus during insertion/removal of the board so that adverse effects on other boards are avoided. This document does not, however, disclose or suggest specifically the idea of disabling the clock signal reaching the board in order to place the board in a low-current state to prevent damage to connection terminals during insertion/removal.

Reference will now be made, by way of example, to the accompanying drawings, in which:
Figure 1 is a side view of a conventional combination of a board and a mother board;
Fig. 2 is a schematic circuit diagram of a circuit board assembly in accordance with an embodiment of the present invention;
Fig. 3 is a diagram for explaining the operation of the assembly of Fig. 2; and
Fig. 4 is a circuit diagram of parts of a circuit board assembly in accordance with another embodiment of the present invention.

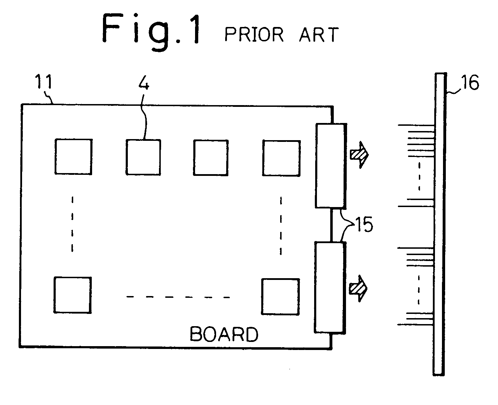

Prior to the explanation of the embodiments of the present invention, the connection and disconnection of a conventional board in a hot state is explained with reference to Fig. 1. In Fig. 1, a board 11 is connected to a mother-board 16 through a connector 15; the board 11 having dynamic elements 4 mounted thereon. The ground pins of the mother-board 16 are longer than the other pins, some of which supply electric power to the board 11 and some of which connect signal lines between the board 11 and mother-board 16. When the board 11 is connected, first the ground pins are connected to the connectors 15. If a small electric current is flowing therethrough, this method is appropriate, but if the dynamic elements are supplied with electric power (current) whilst the clock signals are active, a first contacting pin may be destroyed due to the flow therethrough of a large current greater than the capacity of the pin. This is a disadvantage of the above conventional connection and disconnection method.

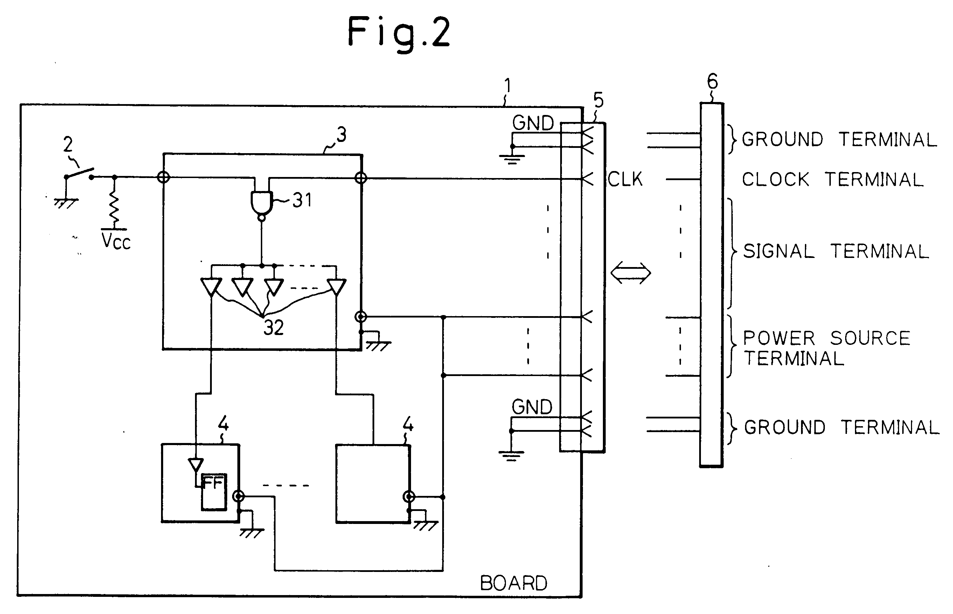

Embodiments of the present invention are now explained with reference to Figs. 2 to 4.

The circuit board assembly shown in Fig. 2 comprises a board 1 and a mother-board 6 serving as a power-supply unit for supplying power and control signals to the board 1. As shown in Fig. 2, on the board 1 are mounted a plurality of dynamic elements, a clock distribution circuit (clock enable/disable means) 3 for permitting or preventing application of clock signals (CLK) to the dynamic elements 4 in response to "OFF" and "ON" operations respectively of a board exchange switch 2, and a connector 5 connecting the board 1 with the mother-board 6. The dynamic (clocked circuitry) elements 4 comprise CMOS circuits or Bi-CMOS circuits, which require only a very small electric current when in a non-operative state, i.e. when the clock signal is not supplied. A Bi-CMOS circuit comprises a CMOS circuit and a bipolar circuit.

The clock distribution circuit 3 comprises a NAND gate 31 and buffer gates 32, receives clock signals from the connector 5, and distributes the clock signals to the plurality of dynamic elements 4, or stops the supply of the clock signals, in accordance with whether the board exchange switch 2 is set to the enable or disable state. The dynamic elements 4 supplied with the clock signals operate in synchronization with the clock. During operation, the electric current is larger than the current capacity of one pin of the connector 5 in the board 1, and therefore the electric current is supplied through a plurality of power source terminals and a plurality of ground terminals. In addition, when the board exchange switch 2 is "ON", the clock distribution circuit is in the disabled state, and when the switch 2 is "OFF", the clock distribution circuit is in the enable state.

The connector 5 receives the large current flowing from the mother-board 6 to the board 1 through the power source supply terminals and the ground terminals and receives or supplies various signals from or to the mother-board 6.

When the mother-board 6 is in the hot state, i.e. in the state in which power is supplied thereto, the connector 5 can be connected or disconnected from the board 1. The ground pin of the mother-board 6 is long and the power supply pins and the pins for the various signals are short. Accordingly, upon connection, first the ground pins are connected to the terminals of the connector 5 of the board 1, and then the power supply pins are connected to the terminals of the connector 5 of the board 1.

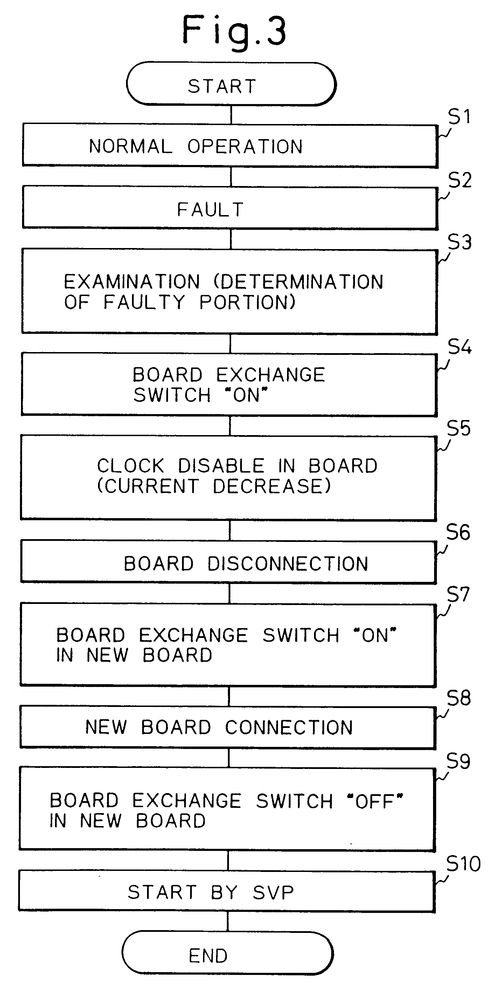

Next, the operation of the above circuit board assembly is explained with reference to Fig. 3.

In Fig. 3, in step S1, the device is operating normally; i.e. the board 1 in Fig. 2 is connected to the mother-board 6 and is operating normally.

In step S2, assuming that a fault has occurred in the board 1 shown in Fig. 2 (e.g. parts breakdown, etc.), the board cannot operate normally.

Then, in step S3, an examination is carried out, whereby a service processor SVP detects the fault and and determines which is the faulty board.

Thereafter, in step S4, the board exchange switch 2 is made "ON" (clock disable), so that in step S5 the clock signals are not supplied to the board 1, and the current flowing therethrough remains low. Since the board exchange switch 2 was made "ON" in step 4, the clock distribution circuit 3 stops the supply of clock signals to the dynamic elements 4, and thus the electric current flowing through the power source terminals and the ground terminals of the connector 5 is lower than the current capacity of one terminal (or pin).

Then in step S6, the board 1 is disconnected, and since the current supplied through the connector 5 is lower than the capacity of one terminal of the connector 5, the board 1 can be disconnected from the mother-board 6 with little fear of damage thereto.

Thereafter in step S7, the board exchange switch 2 of a new board is made "ON", and in step S8, the new board 1 is connected; i.e. the connector 5 of the new board 1 is connected to the mother-board 6, to replace the old faulty board 1.

Then, in step S9, the board exchange switch 2 of the new board 1 is made "OFF", so that the new clock distribution circuit 3 starts to supply clock signals to the new dynamic elements 4.

Thereafter, in step 10, the new board 1 is operated by the SVP. Namely, the SVP operates the dynamic elements 4 supplied with clock signals after the initializing thereof.

Thus, when the board exchange switch 2 is made "ON", a low current flows through the board, so that the old board 1 can be disconnected, and the new board 1 can be connected, while in the hot state.

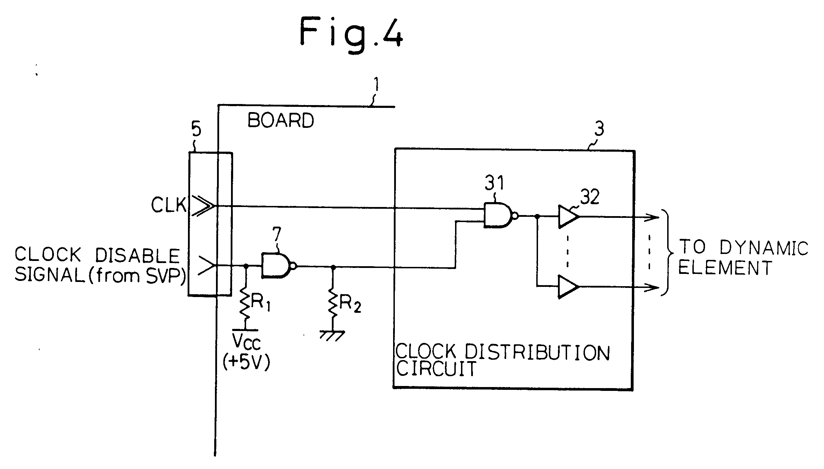

Next, an example of the clock enable and disable circuit when operated by remote control is explained with reference to Fig. 4.

In Fig. 4, if an "H level" (high level) clock disable signal is applied to a NAND gate 7 or the "H level" clock signal is applied to the NAND gate by way of a pull up resistor R₁ due to a disconnection of the connector 5 from the mother-board 6, an "L level" (low level) signal is supplied to a NAND gate 31 which forms part of the clock distribution circuit 3, and the circuit 3 stops the supply of clock signals (CLK) to the dynamic elements 4. Thus, since a low current is flowing in the board 1, the connector 5 of the board 1 can be disconnected from the mother-board 6 or the connector 5 of the new board 1 can be connected to the mother-board 6, without danger. Further, the SVP supplies an "L level" signal to the NAND gate 7, an "H level" signal is supplied to the NAND gate 31 in the clock distribution circuit 3, the clock signals are supplied to the dynamic elements 4 and the board 1 operates normally.

As mentioned above, the board 1 can be set to a low current flow state or can be switched to the operating state by remote control from the SVP.

In the embodiment illustrated in Fig. 2, when the board 1 is disconnected, the board exchange switch is "ON", the clock enable/disable means 3 is in a disabling state, and the board 1 is disconnected from the mother-board 6 while a low current flows therethrough. When the board 1 is connected, the new board 1, wherein the board exchange switch is made "ON", is connected to the mother-board 6, and then the board exchange switch is made "OFF", the clock enable/disable means 3 is in an enabling state, and the board operates normally. Similarly, in the embodiment shown in Fig. 4, when the board 1 is disconnected or connected the clock signal enable/disable circuit is set to the disabling state by remote control.

Accordingly, in the above-described embodiments, when the board is connected or disconnected by setting the board exchange switch or by remote control, a low current flow state is set, and accordingly, the board can be connected to or disconnected safely from the mother-board 6. Therefore, since a large current does not flow through the ground terminals or the power source terminals of the connector 5, the board 1 can be connected or disconnected in the hot state, without damaging those terminals.

## Claims

1. A circuit board assembly of the kind comprising a circuit board (1) removably engaged with an electrical power supply unit (6) for delivering electrical power and control signals to the board, which board includes a clocked circuitry element (4) switchable, by application thereto of a predetermined clock signal (CLK) delivered to the board from the said power supply unit, from a first state to a second state in which the electric current drawn by the said element is high as compared with the current drawn thereby when in the said first state;
characterised in that the said circuit board (1) further includes clock enable/disable means (2,3) switchable selectively from an enabling state, permitting such a clock signal to bring about switching of the said element to the said second state, to a disabling state preventing such switching of the said element, thereby to maintain the said element in a low-current state so that the danger of destruction of connection terminals used to connect the circuit board to the power supply unit is reduced during disengagement of the circuit board from the power supply unit.

2. A circuit board assembly as claimed in claim 1, wherein the said clock enable/disable means (2,3) comprise a board exchange switch (2) mounted on the said board for switching the clock enable/disable means between the said enabling and disabling states.

3. A circuit board assembly as claimed in claim 1, wherein the said clock enable/disable means (2,3) are switchable between the said enabling and disabling states by a remote control signal generated externally of the board.

4. A method of removing a circuit board (1) from an electrical power supply unit (6) with which the said board is engaged, which unit serves for delivering electrical power and control signals to the said board which includes a clocked circuitry element (4) switchable, by application thereto of a predetermined clock signal (CLK) delivered to the board from the said power-supply unit, from a first state to a second state in which the electric current drawn by the said element is high as compared with the current drawn thereby when in the said first state; characterised by the step of switching clock enable/disable means (2,3), which form part of the said board (1), from an enabling state, permitting such a clock signal to bring about switching of the said element to the said second state, to a disabling state preventing such switching of the said element, so that the removal can then be effected whilst the said element is maintained, by operation of the clock enable/disable means in the said disabling state, in a low-current state.

5. A method as claimed in claim 4, wherein, after the said removal of the board, the same board or a replacement such board is brought into engagement with the said power supply unit (6) whilst the said clocked circuitry element (4) of that board is maintained, by operation of clock enable/disable means (2,3) of that board in the said disabling state, in a low-current state.

6. A method of bringing a circuit board (1) into engagement with an electrical power supply unit (6) so that the unit can serve for delivering electrical power and control signals to the said board which includes a clocked circuitry element (4) switchable, by application thereto of a predetermined clock signal (CLK) delivered to the board from the said power supply unit, from a first state to a second state in which the electric current drawn by the said element is high as compared with the current drawn thereby when in the said first state; characterised in that the board is brought into engagement with the power supply unit whilst clock enable/disable means (2,3), which form part of the said board (1), are in a disabling state, preventing such a clock signal from bringing about switching of the said element to the said second state, so that the engagement can be effected whilst the said element is maintained, by operation of the clock enable/disable means in the said disabling state, in a low-current state, whereafter the said clock enable/disable means are switched to an enabling state permitting such switching of the said element.

## Patentansprüche

1. Eine gedruckte Schaltungskartenanordnung der Art, die eine gedruckte Schaltungskarte (1) umfaßt, die lösbar mit einer elektrischen Stromversorgungseinheit (6) in Eingriff steht, die elektrische Leistung und Steuersignale an die Schaltungskarte (1) übergibt, wobei die Schaltungskarte ein getaktetes Schaltkreiselement (4) enthält, das durch Anlegung eines vorherbestimmten Taktsignales (CLK), das an die Schaltungskarte von der genannten Stromversorgungseinheit übergeben worden ist, von einem ersten Zustand in einen zweiten Zustand schaltbar ist, in dem der von dem genannten Element gezogene elektrische Strom hoch ist, verglichen mit dem Strom, der von ihm gezogen wird, wenn er sich in dem genannten ersten Zustand befindet;
dadurch gekennzeichnet, daß die genannte gedruckte Schaltungskarte (1) des weiteren Taktfreigabe/Sperrmittel (2, 3) enthält, die selektiv von einem Freigabezustand, der es einem derartigen Taktsignal erlaubt, ein Schalten des genannten Elementes in den zweiten Zustand herbeizuführen, in einen Sperrzustand schaltbar sind, der ein derartiges Schalten des genannten Elementes verhindert, um so das genannte Element in einem Niedrigstromzustand zu halten, so daß die Gefahr der Zerstörung von Verbindungsanschlüssen, die verwendet werden, um die gedruckte Schaltungskarte mit der Stromversorgungseinheit zu verbinden, während des Trennens der gedruckten Schaltungskarte von der Stromversorgungseinheit, vermindert wird.

2. Die gedruckte Schaltungskartenanordnung nach Anspruch 1, in der die genannten Taktfreigabe/Sperrmittel (2, 3) einen Schaltungskartenaustauschschalter (2) umfassen, der auf der genannten Schaltungskarte befestigt ist, um das Taktfreigabe/Sperrmittel zwischen den genannten Freigabe- und Sperrzuständen zu schalten.

3. Die gedruckte Schaltungskartenanordnung nach Anspruch 1, in der die genannten Taktfreigabe/Sperrmittel (2, 3) zwischen den genannten Freigabe- und Sperrzuständen durch ein Fernsteuerungssignal schaltbar sind, das extern von der Schaltungskarte erzeugt worden ist.

4. Ein Verfahren zum Entfernen einer gedruckten Schaltungskarte (1) von einer elektrischen Stromversorgungseinheit (6), mit der die genannte Schaltungskarte in Eingriff steht, wobei die Einheit dazu dient, elektrische Leistung und Steuersignale an die genannte Schaltungskarte (1) zu übergeben, die ein getaktetes Schaltkreiselement (4) enthält, das durch Anlegung eines vorbestimmten Taktsignales (CLK), das an die Schaltungskarte von der genannten Stromversorgungseinheit übergeben worden ist, von einem ersten Zustand in einen zweiten Zustand schaltbar ist, in dem der von dem genannten Element gezogene elektrische Strom hoch ist im Vergleich mit dem Strom, der von ihm gezogen wird, wenn er sich in dem genannten ersten Zustand befindet; gekennzeichnet durch den Schritt des Schaltens von Taktfreigabe/Sperrmitteln (2, 3), die einen Teil der genannten Schaltungskarte (1) bilden, von einem Freigabezustand, der es einem derartigen Taktsignal erlaubt, das Schalten des genannten Elementes in den genannten zweiten Zustand herbeizuführen, in einen Sperrzustand, der ein derartiges Schalten des genannten Elementes verhindert, so daß das Entfernen dann durchgeführt werden kann, wenn das genannte Element durch Betrieb der Taktfreigabe/Sperrmittel in dem genannten Sperrzustand, in einem Niedrigstromzustand gehalten wird.

5. Ein Verfahren nach Anspruch 4, in dem nach dem genannten Entfernen der Schaltungskarte die selbe Schaltungskarte oder eine ErsatzSchaltungskarte mit der genannten Stromversorgungseinheit (6) in Eingriff gebracht wird, während das genannte getaktete Schaltkreiselement (4) dieser Schaltungskarte durch den Betrieb von Taktfreigabe/Sperrmitteln (2, 3) von dieser Schaltungskarte in dem genannten Sperrzustand, in einem Niedrigstromzustand gehalten wird.

6. Ein Verfahren, um eine gedruckte Schaltungskarte (1) mit einer elektrischen Stromversorgung (6) in Eingriff zu bringen, so daß die Einheit für die Übergabe elektrischer Leistung und von Steuersignalen an die genannte Schaltungskarte dienen kann, die ein getaktetes Schaltkreiselement (4) enthält, das durch Anlegung eines vorherbestimmten Taktsignales (CLK), das an die Schaltungskarte (1) von der genannten Stromversorgungseinheit (6) übergeben worden ist, von einem ersten Zustand in einen zweiten Zustand schaltbar ist, in dem der von dem genannten Element gezogene elektrische Strom hoch ist im Vergleich mit dem Strom, der von ihm gezogen wird, wenn er sich in dem genannten ersten Zustand befindet;
dadurch gekennzeichnet, daß die Schaltungskarte (1) mit der Stromversorgungseinheit (6) in Eingriff gebracht wird, während Taktfreigabe/Sperrmittel (2, 3), die einen Teil der genannten Schaltungskarte (1) bilden, sich in einem Sperrzustand befinden, der ein derartiges Taktsignal daran hindert, ein Schalten des genannten Elementes in den genannten zweiten Zustand herbeizuführen, so daß der Eingriff hergestellt werden kann, während das genannte Element durch den Betrieb der Taktfreigabe/Sperrmittel in dem genannten Sperrzustand, in einem Niedrigstromzustand gehalten wird, wonach die genannten Taktfreigabe/Sperrmittel in einen Freigabezustand geschaltet werden, der ein derartiges Schalten des genannten Elementes erlaubt.

## Revendications

1. Ensemble de carte de circuit du type comportant une carte de circuit (1) connectée de façon amovible à une unité d'alimentation électrique (6) pour délivrer de l'énergie électrique et des signaux de commande à la carte, carte qui comprend un élément de circuit synchronisé (4) pouvant être commuté, par application à celui-ci d'un signal d'horloge prédéterminé (CLK) délivré à la carte depuis ladite unité d'alimentation, d'un premir état à un second état dans lequel le courant électrique drainé par ledit élément est intense en comparaison du courant drainé lorsqu'il se trouve dans ledit premier état ;
caractérisé en ce que ladite carte de circuit (1) comprend en outre les moyens de mise en service/hors service d'horloge (2, 3) pouvant être commutés sélectivement depuis un état actif, permettant à un tel signal d'horloge de provoquer une commutation dudit élément dans ledit second état, dans un état inactif empêchant une telle commutation dudit élément, pour ainsi maintenir ledit élément dans un état à courant faible de sorte que le risque de destruction de bornes de connexion utilisées pour connecter la carte de circuit à l'unité d'alimentation est réduit durant une séparation de la carte de circuit de l'unité d'alimentation.

2. Ensemble de carte de circuit selon la revendication 1, dans lequel lesdits moyens de mise en service/ hors service de l'horloge (2, 3) comportent un commutateur d'échange de carte (2) monté sur ladite carte pour commuter les moyens de mise en service/hors service de l'horloge entre lesdits états actif et inactif.

3. Ensemble de carte de circuit selon la revendication 1, dans lequel lesdits moyens de mise en service/hors service de l'horloge (2, 3) peuvent être commutés entre lesdits états actif et inactif par un signal de télécommande généré extérieurement à la carte.

4. Procédé de séparation d'une carte de circuit (1) d'une unité d'alimentation électrique (6) à laquelle ladite carte est connectée, ladite unité servant à la délivrance d'énergie électrique et de signaux de commande à ladite carte qui comprend un élément de circuit synchronisé (4) pouvant être commuté, par application à celui-ci d'un signal d'horloge prédéterminé (CLK) délivré à la carte par ladite unité d'alimentation, entre un premier état et un second état dans lequel le courant drainé par ledit élément est élevé en comparaison du courant drainé lorsqu'il se trouve dans ledit premier état ; caractérisé par l'étape de commutation des moyens de mise en service/hors service de l'horloge (2, 3), qui constituent une partie de ladite carte (1), d'un état actif, permettant à un signal d'horloge de provoquer une commutation dudit élément dans ledit second état, à un état inactif empêchant cette commutation dudit élément, de sorte que la séparation peut ensuite être effectuée tandis que ledit élément est maintenu, par fonctionnement des moyens de mise en service/hors service de l'horloge dans ledit état inactif, dans un état à courant faible.

5. Procédé selon la revendication 4, dans lequel, après ladite séparation de la carte, celle-ci ou une carte de remplacement est amenée en contact avec ladite unité d'alimentation (6) tandis que l'élément de circuit synchronisé (4) de cette borne est maintenu, par fonctionnement des moyens de mise en service/hors service de l'horloge (2, 3) de cette carte dans ledit état inactif, en un état à courant faible.

6. Procédé de mise en contact d'une carte de circuit (1) avec une unité d'alimentation électrique (6) de sorte que l'unité puisse servir pour la délivrance d'énergie électrique et de signaux de commande à ladite carte qui comprend un élément de circuit synchronisé (4) pouvant être commuté, par application à celui-ci d'un signal d'horloge prédéterminé (CLK) délivré à la carte depuis ladite unité d'alimentation, entre un premier état et un second état dans lequel le courant électrique drainé par ledit élément est élevé en comparaison du courant drainé lorsqu'il se trouve dans ledit premier état ; caractérisé en ce que la carte est amenée en contact de l'unité d'alimentation tandis que les moyens de mise en service/ hors service de l'horloge (2, 3), qui constituent une partie de ladite carte (1), se trouvent dans un état inactif, empêchant ce signal d'horloge de provoquer une commutation dudit élément dans ledit second état, de sorte que la connexion peut être effectuée tandis que ledit élément est maintenu, par actionnement des moyens de mise en service/hors service de l'horloge dans ledit état inactif, en un état à courant faible, après quoi les moyens de mise en service/hors service de l'horloge sont commutés dans un état actif permettant une telle commutation dudit élément.
